# EUROPÄISCHE PATENTSCHRIFT

(11) **EP 1 850 596 B1**
(45) Veröffentlichungstag und Bekanntmachung des Hinweises auf die Patenterteilung: **30.04.2014**
(21) Anmeldenummer: 07104638.7
(22) Anmeldetag: 22.03.2007
(51) Int. Cl.: H04N 7/18

(54) **Hauskommunikationsanlage mit Video-Übertragung**
Domestic intercom system with video transmission
Installation de communication ménagère dotée d'une transmission vidéo

(30) Priorität: 31.03.2006 DE 202006005191 U
(43) Veröffentlichungstag der Anmeldung: 31.10.2007
(73) Patentinhaber: GIRA Giersiepen GmbH & Co. KG, 42477 Radevormwald (DE)
(72) Erfinder: Dornseiff, André, 51688, Wipperfürth (DE); Heinbach, Hartmut, 57080, Siegen (DE)
(74) Vertreter: Patentanwälte Dr. Solf & Zapf

(56) Entgegenhaltungen:
- EP-A- 0 789 493
- EP-A1- 1 320 244
- DE-A1- 19 620 363
- US-A- 4 959 713
- US-A1- 2005 141 529

## Beschreibung

Die vorliegende Erfindung betrifft eine Hauskommunikationsanlage mit den Merkmalen des Oberbegriffs des Patentanspruchs 1.

Eine solche Hauskommunikationsanlage ist in der EP 1 320 244 A1 beschrieben. Der Kern dieser Veröffentlichung ist ein modularer Aufbau, wonach die an den gemeinsamen Bus anzuschließenden Stationen zumindest teilweise modular aufgebaut sind. Jede modular aufgebaute Station besteht aus mindestens einem Hauptmodul sowie mindestens einem Funktionsmodul, wobei das Hauptmodul nach Art eines Elektro-Installationsgerätes eines üblichen Gebäudeinstallationssystems aus einem sockelartigen, in eine normgemäße Elektro-Installationsdose einsetzbaren Einsatz besteht. Das Funktionsmodul ist elektrisch und mechanisch durch einfaches Aufstecken mit dem Hauptmodul verbindbar. Diese bekannte Anlage hat den Vorteil, dass aufgrund von wenigen, weitgehend universell verwendbaren Komponenten (Modulen) eine einfache und kostengünstige Herstellung, ein geringer Lager- bzw. Bevorratungsaufwand, eine einfache Montage sowie ein großes Variationsspektrum gewährleistet sind. Für eine Video-Übertragung weist die Türstation ein Kameramodul mit einer Video-Kamera auf. Zumindest eine der Wohnungsstationen weist ein Video-Modul auf, das aus einem Displayeinsatz und einem Displayaufsatz besteht.

Auch die DE 102 53 308 B4 beschreibt eine solche Hauskommunikationsanlage und zudem auch ein Verfahren zur Inbetriebnahme der Anlage. Die Türstation weist eine Anzahl von den Wohnungsstationen zuzuordnenden Ruftasten auf. Die Anlage kann zeitweise zur Programmierung der Zuordnung zwischen den Ruftasten und den Wohnungsstationen in einen Programmiermodus geschaltet werden. Die Programmierung der Ruftasten-Wohnungsstations-Zuordnungen erfolgt hierbei, indem im Programmiermodus zunächst alle zu programmierenden Ruftasten der Türstation in einer beliebig gewählten Reihenfolge nacheinander betätigt werden. Dadurch werden tastenspezifische Adressen (elektronische, digitale Adress-Codes) entsprechend dieser Reihenfolge separat nacheinander abrufbar in einem Speicher abgelegt. Anschließend werden - entsprechend der gewünschten, vorher festgelegten Ruftasten-Zuordnung - die einzelnen Wohnungsstationen nacheinander in der Reihenfolge der abgelegten Adressen auf die jeweilige Ruftaste programmiert, indem an jeder Wohnungsstation durch Betätigen eines zugehörigen Schaltelementes die entsprechend der abgelegten Reihenfolge jeweils nächste tastenspezifische Adresse aus dem Speicher abgerufen und abgelegt wird. Auf diese Weise kann die Programmierung zur Inbetriebnahme auch von einem einzelnen Installateur einfach, schnell und komfortabel mit einem Minimum an Laufarbeit durchgeführt werden.

Das Dokument US-A-4 959 713 beschreibt ebenfalls nur zwei Stationsarten, Türstationen (entrance unit bzw. outdoor unit) und "Wohnungsstationen" (inside unit), Hierbei ist die "inside unit" als TV-Empfänger-Einheit (TV receiving block) ausgebindet.

Ähnliches gilt auch für das Dokument DE 196 20 363 A1, da auch darin nur zwei Stationsarten beschrieben sind, und zwar eine "Türsprech- und Videoanlage mit Steuereinrichtung" (als Türstation) und "Teilnehmersteuereinrichtungen" mit TV-Gerät im Wohnungsbereich.

Das weitere Dokument EP-A-0 789 493 beschreibt ein gänzlich anderes Anlagenprinzip, weil die darin beschriebene Anlage aus zwei getrennten Teilsystemen mit verschiedenen, voneinander unabhängigen Übertragungssystemen besteht, und zwar erstens einer Antennenanlage zur Übermittlung von Kamerasignalen an Fernsehgeräte und zweitens einer Türsprechanlage zur Audio-Übertragung.

Bei einigen bekannten Hauskommunikationsanlagen mit Video-Übertragung wird das von der Kamera erzeugte Signal in der Türstation so frequenzmoduliert, dass das über den Bus zu übertragende modulierte Video-Signal außerhalb einer hörbaren Audio-Frequenz liegt. Dadurch werden hörbare Störungen von Audio-Verbindungen (Sprechverbindungen) vermieden.

Üblicherweise sind die an den Wohnungsstationen vorhandenen Displays zur Darstellung des von der Kamera an der Türstation aufgenommenen Bildes relativ klein. Außerdem befindet sich die Wohnungsstation in aller Regel fest installiert in der Nähe einer Wohnungseingangstür, so dass der Bewohner sich unmittelbar zur Wohnungsstation begeben muss, um das Kamera-Bild erkennen zu können.

Der vorliegenden Erfindung liegt die Aufgabe zugrunde, Mittel zu schaffen, die eine verbesserte und eine komfortablere Betrachtung ermöglichende BildDarstellung des von der Türstation über den Bus übertragenen Video-Bildes gewährleisten.

Erfindungsgemäß wird dies durch die Merkmale des Anspruchs 1 erreicht. Vorteilhafte Ausgestaltungen der Erfindung sind in den abhängigen Ansprüchen enthalten.

Demnach ist die erfindungsgemäße Hauskommunikationsanlage mit mindestens einer an den Bus angeschlossenen oder anschließbaren TV-Gateway-Station ausgestattet, die Mittel zum Umsetzen des Bus-Videosignals in ein geeignetes TV-Eingangssignal eines üblichen Fernsehgerätes aufweist. Somit kann über die erfindungsgemäße TV-Gateway-Station ein übliches Fernsehgerät direkt angeschlossen werden. Dabei kann als TV-Eingangssignal ein HF-moduliertes Signal zur Einspeisung in ein Breitband- bzw. Antennenkabel generiert werden, beispielsweise UHF oder VHF. Vorzugsweise ist aber die TV-Gateway-Station als Demodulator ausgebildet, der das modulierte Bus-Videosignal in ein Basisband-Signal, insbesondere ein Farb-Bild-Austast-Synchron-Signal (FBAS-Signal bzw. CVBS= Colour Video Baseband Signal) umformt. In diesem Fall weist die TV-Gateway-Station als Ausgang bevorzugt einen üblichen Scart-Anschluss auf, der über ein Scart-Kabel direkt mit dem Fernsehgerät verbunden werden kann. Dabei kann auch in üblicher Weise zusätzlich zu dem FBAS-Signal ein Schaltsignal generiert werden, mit dem das Fernsehgerät zur Bilddarstellung angesteuert werden kann (selbsttätiges Umschalten auf einen AV-Kanal).

Zu dem Begriff "Basisband-Signal" wird zur Erläuterung bemerkt, dass es sich um ein Signal in einem Frequenzbereich handelt, in dem sich das zu übertragende Nutzsignal befindet.

Grundsätzlich ist es auch möglich, als TV-Eingangssignal anstatt FBAS oder HF ein anderes geeignetes Signal zu generieren, z. B. RGB-Signal, S-Video, YUV-Signal (alle analog) oder HDMI (digital).

Durch die Erfindung wird somit auf eine recht einfache und auch wirtschaftlich realisierbare Weise erreicht, dass ein - üblicher Weise ohnehin vorhandenes - TV-Gerät in die Hauskommunikationstechnik einbezogen werden kann. Dies führt zu einer sehr viel komfortableren Bilddarstellung, weil einerseits das Bild größer und andererseits das Fernsehgerät üblicherweise in einem Wohnbereich angeordnet ist, in dem sich der Bewohner in aller Regel überwiegend aufhält. Der Bewohner kann folglich im Wohnbereich bleiben, indem das von der Kamera an der Türstation erzeugte Bild nicht, zumindest nicht nur, an der Wohnungsstation, sondern auf dem Fernsehgerät in einer entsprechenden Größe dargestellt wird. Indem somit das Fernsehgerät über die erfindungsgemäße TV-Gateway-Station praktisch zu einem Bestandteil der Hauskommunikationsanlage wird, kann über die Inbetriebnahme-Programmierung der Anlage festgelegt werden, in welchen Fällen das Fernsehgerät aktiviert werden soll. Dazu wird die TV-Gateway-Station so betrachtet wie eine Wohnungsstation. Dies bedeutet, dass ebenfalls eine Zuordnung zwischen Ruftasten der Türstation und TV-Gateway-Station(en) erfolgt. Zusätzlich kann die jeweilige TV-Gateway-Station auch wenigstens einer Wohnungsstation zugeordnet werden, damit nur dann eine Aktivierung bestehen bleibt, wenn an der jeweils zugehörigen Wohnungsstation ein Ruf angenommen wurde. Schließlich ist in bevorzugter Ausgestaltung vorgesehen, die/jede TV-Gateway-Station auch der/jeder mit einer Kamera ausgestatteten Türstation zuzuordnen. Dadurch kann bei Bedarf eine Video-Übertragung über die TV-Gateway-Station von der Wohnung aus initiiert werden, und zwar auch ohne vorhergehenden Ruf von der Türstation zur Wohnungsstation.

Im Folgenden soll die Erfindung zusammen mit weiteren vorteilhaften Ausgestaltungsmerkmalen anhand der Zeichnung beispielhaft genauer erläutert werden. Dabei zeigen:
- Fig. 1: eine schematische, blockschaltbildartige Darstellung eines möglichen Aufbaus einer erfindungsgemäßen Hauskommunikationsanlage,
- Fig. 2: ein weiteres vereinfachtes Blockschaltbild im Bereich der erfindungsgemäßen TV-Gateway-Station in einer ersten Ausführung mit Direktanschluss eines Fernsehgerätes,
- Fig. 3: eine Darstellung ähnlich Fig. 2 in einer zweiten Ausführung mit einer Bildeinspeisung in ein Breitband-/Antennenkabel über einen zusätzlichen Umsetzer,
- Fig. 4: eine weitere Ausführungsvariante zu Fig. 2 und 3,
- Fig. 5: ein Blockschaltbild eines ersten Anwendungsbeispiels zur Zuordnung (nur) einer TV-Gateway-Station zu mehreren Tür/Wohnungsstationen mit (nur) einem Fernsehgerät im Direktanschluss,
- Fig. 6: eine Darstellung analog zu Fig. 5 eines zweiten Anwendungsbeispiels einer Zuordnung (nur) einer TV-Gateway-Station zu mehreren Wohnungsstationen mit mehreren Fernsehgeräten im Breitband-Betrieb,
- Fig. 7: ein weiteres Anwendungsbeispiel in einer Darstellung ähnlich Fig. 5 und 6, wobei jeder Wohnungsstation eine eigene TV-Gateway-Station mit je einem Fernsehgerät im Direktanschluss zugeordnet ist,
- Fig. 8: eine Prinzipdarstellung zur Erläuterung des Programmiervorgangs der TV-Gateway-Station und
- Fig. 9: eine Prinzipdarstellung ähnlich Fig. 8 zur Erläuterung eines Löschvorgangs im Programmiermodus.

In den verschiedenen Figuren der Zeichnung sind gleiche bzw. sich funktionell entsprechende Teile und Komponenten stets mit den gleichen Bezugszeichen versehen. Daher gilt jede Beschreibung eines Teils unter Bezugnahme auf nur wenigstens eine der Zeichnungsfiguren analog auch bezüglich der anderen Zeichnungsfiguren, in denen das Teil mit dem entsprechendem Bezugszeichen ebenfalls zu erkennen ist.

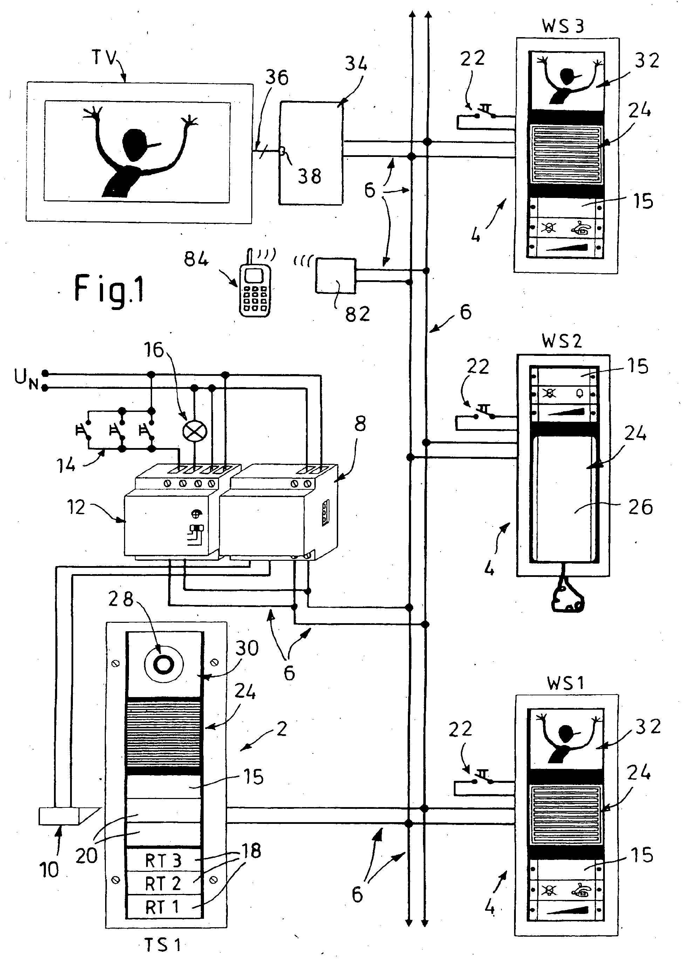

Wie zunächst beispielhaft in Fig. 1 dargestellt ist, besteht eine erfindungsgemäße Hauskommunikationsanlage aus mindestens einer Türstation 2 und einer beliebigen Anzahl von Wohnungsstationen 4 (mindestens eine). Die Türstation 2 wird in aller Regel im äußeren Eingangsbereich eines Hauses in der Nähe einer Haustür installiert. Die Wohnungsstationen 4 werden jeweils innerhalb einer Wohnung, insbesondere im inneren Eingangsbereich angeordnet. Alle Stationen 2, 4 sind oder werden über einen gemeinsamen Zweidraht-Bus 6 miteinander verbunden. Weiterhin ist ein Bussteuergerät 8 an den Bus 6 angeschlossen. Dieses Bussteuergerät 8 kann in einer zentralen Elektroverteilung des Hauses untergebracht und an eine Netzspannung U_{N} angeschlossen sein. Weiterhin kann über das Bussteuergerät 8 mindestens ein elektrischer Türöffner 10 einer Haustür angeschlossen werden. Der Türöffner 10 wird über einen Schaltaktor innerhalb des Bussteuergerätes 8 angesteuert. Weiterhin ist in Fig. 1 beispielhaft ein zusätzlicher, ebenfalls an den Bus 6 angeschlossener Schaltaktor 12 dargestellt, der beispielsweise dazu vorgesehen ist, über gesonderte, z. B. in einem Treppenhaus installierte Schaltmittel 14 und/oder über Schaltmittel der Wohnungsstationen (z. B. Licht-Tasten 15) eine Beleuchtung 16, beispielsweise eine Treppenhaus-Beleuchtung, zu schalten. Auch die Türstation 2 kann mit einer entsprechenden Licht-Taste 15 für diese Funktion ausgestattet sein.

Die Türstation 2 weist eine bestimmte Anzahl von Ruftasten 18 auf, die den vorhandenen Wohnungsstationen 4 zuzuordnen sind. Diese Zuordnung wird im Folgenden noch erläutert werden. Dazu ist die Türstation 2 zusätzlich mit der Kennzeichnung TS1 versehen. Die beispielhaft vorhandenen drei Wohnungsstationen 4 sind zusätzlich mit WS1, WS2 und WS3 gekennzeichnet. Dem entsprechend tragen die zugehörigen Ruftasten 18 der Türstation 2 (beziehungsweise TS1) die Kennzeichnungen RT1, RT2 und RT3.

Die Türstation 2 kann zusätzlich weitere Tasten 20 für bestimmte (beliebige) Zusatzfunktionen aufweisen.

Weiterhin ist in der Regel jeder Wohnungsstation 4 eine im äußeren Eingangsbereich vor der jeweiligen Wohnung, beispielsweise in einem Treppenhaus, angeordnete Etagenruftaste 22 zugeordnet, die über Leitungen an Anschlüssen der Wohnungsstation 4 angeschlossen wird.

Der Bus 6 ist zur Übertragung von digitalen Steuersignalen und Kommunikationssignalen, und zwar Audio- und auch Videosignalen, ausgelegt und überträgt bevorzugt zusätzlich auch die Versorgungsspannung von einem Netzteil im Steuergerät 10 an die einzelnen Stationen 2, 4. Die Stationen 2, 4 weisen dazu jeweils einen bevorzugt modularen Audio-Teil 24 auf, der zum Freisprechen/Freihören ausgelegt (bei den Stationen TS1, WS1 und WS3) oder mit einem Telefon-Hörer 26 ausgestattet sein kann (bei der Station WS2). Die Türstation 2 weist zusätzlich eine Video-Kamera 28 auf, die bevorzugt Bestandteil eines ebenfalls modular aufgebauten Videoteils 30 ist. Die Wohnungsstationen 4 können mit einem geeigneten Video-Display 32 ausgestattet sein, wie dies beispielhaft bei den Wohnungsstationen WS1 und WS3 dargestellt ist. Dabei ist auch jedes Display 32 bevorzugt Bestandteil eines Videomoduls. Die Video-Kamera 28 ist mit Mitteln zum Erzeugen eines über den Bus 6 zu übertragenden Bus-Videosignals ausgestattet, wobei dieses Bus-Videosignal derart frequenzmoduliert ist, dass es außerhalb (oberhalb) einer hörbaren Audio-Frequenz liegt. Dadurch werden Beeinträchtigungen des Audiosignals durch das Videosignal vermieden.

Erfindungsgemäß ist nun mindestens eine neuartige, an den Bus 6 anzuschließende TV-Gateway-Station 34 vorgesehen, die Mittel zum Umsetzen des modulierten Bus-Videosignals in ein geeignetes TV-Eingangssignal eines üblichen Fernsehgerätes TV aufweist. Dadurch kann ein Fernsehgerät TV über die TV-Gateway-Station 34 an die Hauskommunikationsanlage angeschlossen werden.

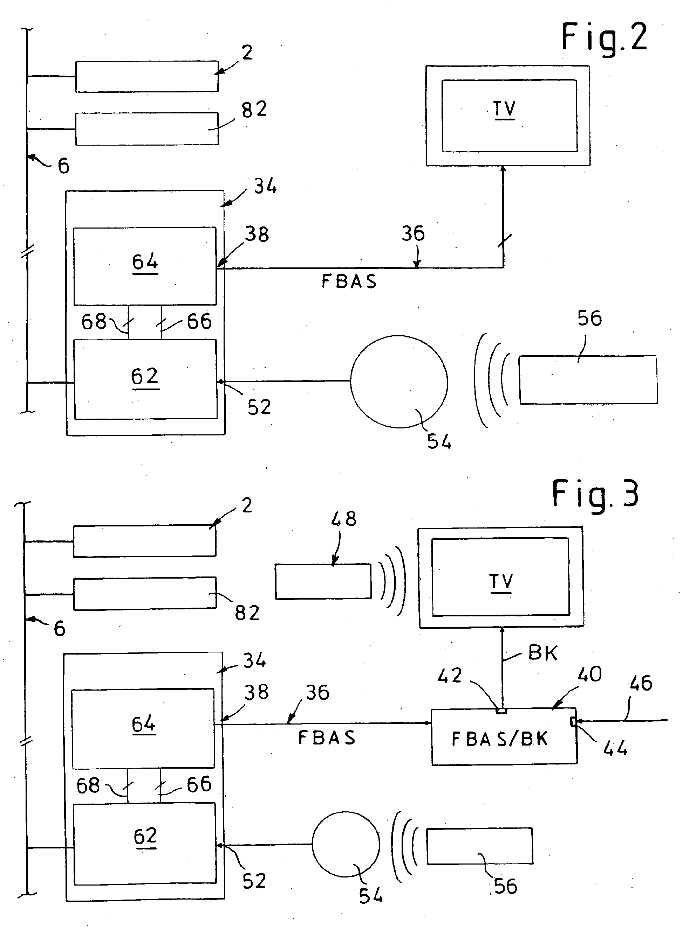

In bevorzugter Ausgestaltung generiert die TV-Gateway-Station 34 als TV-Eingangs-signal ein Basisband-Signal, und zwar insbesondere ein Farb-Bild-Austast-Synchron-Signal, wie es auch unter der Abkürzung FBAS bzw. in Englisch CBVS (=Colour Video Baseband Signal) bekannt ist. Das Fernsehgerät TV kann hierbei gemäß Fig. 2 direkt über eine Basisband-Verbindung 36 angeschlossen werden, die heute üblicher Weise durch ein sogenanntes Scart-Kabel realisiert wird. Dazu weist die TV-Gateway-Station 34 einen als Scart-Anschlus ausgebildeten Ausgang 38 auf. Die Basisband-Verbindung 36 ist mehradrig ausgeführt, wobei auch ein zusätzliches Schaltsignal zum Ansteuern des Fernsehgerätes TV übertragen wird.

Wie sich aus Fig. 3 ergibt, kann bei Bedarf ein zusätzlicher Umsetzer 40 eingesetzt werden, der als Modulator das Basisband-Signal in ein moduliertes HF-Signal, beispielsweise UHF oder VHF, umsetzt. Dabei ist der Umsetzer 40 über die Basisband-Verbindung 36 (Scart-Kabel) mit dem Ausgang 38 der TV-Gateway-Station 34 zu verbinden. Ausgangsseitig weist der Umsetzer 40 mindestens einen Anschluss 42 für ein Breitband-Kabel BK auf. Dabei handelt es sich um ein z. B. für Antennenanlagen übliches Koaxialkabel. Ferner kann der Umsetzer 40 mindestens einen Eingang 44 für ein weiteres Einspeisungskabel 46 beispielsweise einer Haus-Antennen-Anlage (auch SAT) oder eines TV-Kabelanschlusses aufweisen. Der Umsetzer 40 kann über den Anschluss 42 auch mit einem Multischalter für eine Mehrteilnehmer-Satellitenanlage verbunden werden.

Ergänzend ist in Fig. 3 dargestellt, dass das Fernsehgerät TV mittels einer üblichen Fernbedienung 48 steuerbar ist.

Alternativ zu der beschriebenen, bevorzugten Ausführung kann die TV-Gateway-Station 34 natürlich auch so ausgelegt werden, dass sie an ihrem Ausgang 38 ein HF-moduliertes Signal (UHF/VHF) bereitstellt. Dazu ist dann der Ausgang 38 natürlich zum Anschluss eines Breitband-Kabels BK auszuführen.

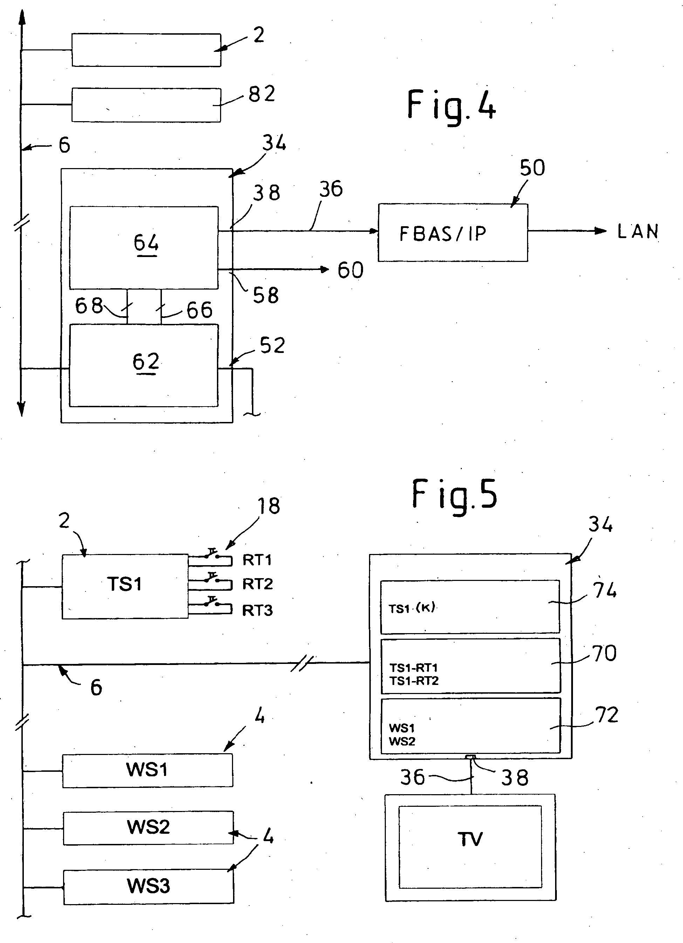

In Fig. 4 ist als weitere Möglichkeit veranschaulicht, das Ausgangssignal der TV-Gateway-Station 34 über einen zusätzlichen Umsetzer 50 in ein geeignetes Computer-Netzwerk-Signal zur Video-Bilddarstellung auf einem üblichen Computer-Bildschirm umzuformen. Der Umsetzer 50 kann für einen üblichen Netzwerk-Standard ausgelegt sein, beispielsweise Ethernet bzw. TCP/IP (Internet Protokoll).

Gemäß Fig. 2 und 3 kann die TV-Gateway-Station 34 in weiterer vorteilhafter Ausgestaltung einen Steuereingang 52 zum Anschluss einer externen Steuereinrichtung aufweisen. Als Steuereinrichtung kann insbesondere ein Tast-Aktor 54 vorgesehen sein, der mittels eines drahtlosen (Funk-) Handsenders 56 und/oder auf andere Weise, z. B. über EIB (European Installation BUS) steuerbar ist. Zusätzlich oder alternativ kann der Aktor 54 auch direkt manuell betätigbar sein.

Weiterhin ist in Fig. 4 angedeutet, dass die TV-Gateway-Station 34 einen Steuerausgang 58 für ein bestimmtes Schaltsignal 60 aufweisen kann, mit dem beliebige Schaltfunktionen initiiert werden können.

Was den inneren Aufbau der TV-Gateway-Staion 34 betrifft, so ist in den Fig. 2 bis 4 blockschaltbildartig veranschaulicht, dass die TV-Gateway-Station 34 einen Busankoppler 62 zum Anschluss an den Bus 6 sowie einen mit dem Busankoppler 62 intern verbundenen Video-Umsetzer 64 aufweist. Die interne Verbindung erfolgt über Leiter, z. B. eine 2-fach-Leitung 66 für den Bus (insbesondere Bus-Videosginal) und eine zusätzliche 6-fach-Leitung 68 (insbesondere Steuersignale, Spannungsversorgung).

Die Türstation 2 und/oder zumindest ein Teil der Wohnungsstationen 4 sind bevorzugt modular aufgebaut, wie dies Gegenstand der EP 1 320 244 A1 ist, auf die deshalb an dieser Stelle im vollen Umfange Bezug genommen wird. Dem entsprechend ist bevorzugt auch die TV-Gateway-Station 34 modular aufgebaut, indem der Busankoppler 62 als Busankopplermodul und der Videoumsetzer 64 vorzugsweise zweiteilig aus einem Video-Umsetzermodul und einem TV-Anschlussmodul ausgebildet sind. Dabei sind das Busankopplermodul und das Video-Umsetzermodul jeweils als Einsatzgerät nach Art eines üblichen Gebäude-Elektroinstallationsgerätes ausgebildet und in eine übliche Elektroinstallationsdose, insbesondere eine übliche UP-Dose (Unterputz-Dose), einsetzbar. Das TV-Anschlussmodul bildet hierbei bevorzugt ein unmittelbar insbesondere auf das Umsetzermodul aufsetzbares und dadurch elektrisch und mechanisch verbindbares Aufsatzgerät. Bezüglich weiterer Einzelheiten wird nochmals auf die EP 1 320 244 A1 verwiesen.

Wie eingangs schon erläutert wurde, müssen bei einer Zweidraht-Bus-Hauskommunikationsanlage alle Stationen in einem Programmiermodus einander zugeordnet werden. Dies erfolgt über eine bestimmte Abspeicherung von digitalen Adresscodes. Dazu sind innerhalb der Anlage Speichermittel zum Speichern von digitalen Adressen zum Festlegung von Zuordnungen zwischen Türstations-Ruftasten 18, Wohnungsstationen 4 und TV-Gateway-Station(en) 34 vorgesehen.

Was die erfindungsgemäße TV-Gateway-Station 34 betrifft, so weist diese gemäß den Darstellungen in Fig. 5 bis 7 zunächst einen Ruftastenspeicher 70 zum Ablegen mindestens einer Ruftastenadresse auf. Weiterhin ist die TV-Gateway-Station 34 mit einem Stationsspeicher 72 zum Ablegen mindestens einer Stationsadresse mindestens einer Wohnungsstation 4 und/oder der bzw. mindestens einer Türstation 2 ausgestattet. In bevorzugter Ausgestaltung weist die TV-Gateway-Station 34 noch einen Kameraspeicher 74 auf, der zum Ablegen der Adresse von mindestens einer mit einer Kamera 28 ausgestatteten Türstation 2 dient. Der Sinn und die Funktion dieser Speicher werden im Folgenden noch genauer erläutert werden.

In Verbindung mit den genannten Speichern 70, 72, 74 sind Steuermittel derart vorgesehen, dass bei Auftreten eines Rufsignals einer Ruftaste 18 die TV-Gateway-Station 34 aktiviert wird, wenn die entsprechende Adresse der Rufsignal-Ruftaste 18 und/oder die zugehörige Stationsadresse der Türstation 2 in der TV-Gateway-Station 34 abgelegt sind/ist. Weiterhin wirken die Steuermittel so, dass bei Aktivieren einer Sprechverbindung zwischen der Türstation 2 und der jeweils gerufenen Wohnungsstation 4 entweder die TV-Gateway-Station 34 aktiviert bleibt, wenn die Adresse dieser Wohnungsstation 4 in der TV-Gateway-Station 34 abgelegt ist, oder die TV-Gateway-Station 34 deaktiviert wird, wenn die Adresse dieser Wohnungsstation 4 nicht in der TV-Gateway-Station 34 abgelegt ist.

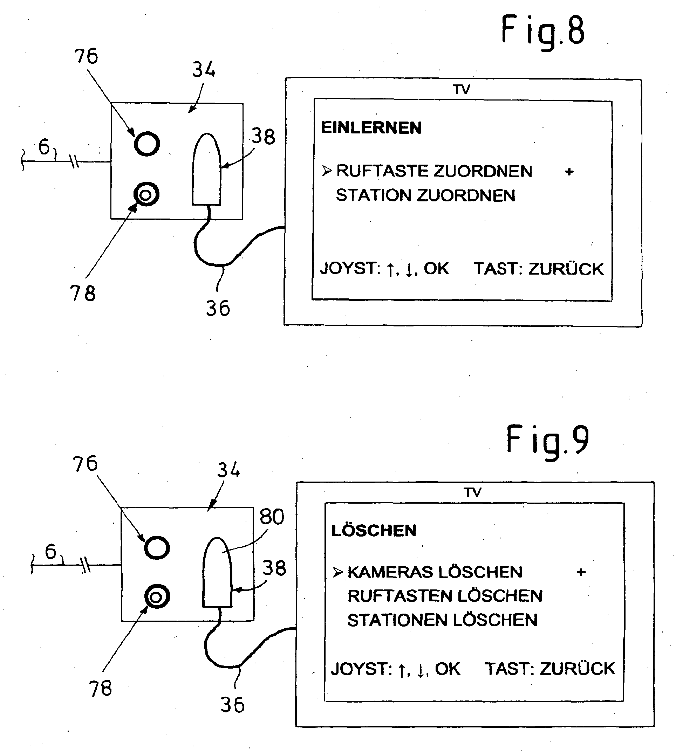

Wie sich aus den Fig. 8 und 9 ergibt, weist die TV-Gateway-Station 34 Mittel für eine Menü-Steuerung über eine zur Darstellung auf dem angeschlossenen Fernsehgerät TV generierte und über Bedienelemente steuerbare Menü-Struktur auf. Als Bedienelemente können ein Drucktaster 76 und mit Vorteil ein sogenannter Joystick 78 vorgesehen sein. In diesen Figuren ist ferner erkennbar, dass das als Basisbandverbindung 36 vorgesehene Scartkabel mit seinem Scartstecker 80 auf den Ausgang 38 aufgesteckt ist, wobei der Ausgang 38 als entsprechende Scartbuchse ausgeführt ist. Diese sowie auch die Bedienelemente 76, 78 sind Bestandteile des Modul-Aufsatzgerätes des Video-Umsetzers 64.

Der Vollständigkeit halber sei noch erwähnt, dass die Anlage optional mit mindestens einer TK-Gateway-Station 82 ausgestattet sein kann (vgl. Fig. 1 bis 4), die Mittel zum Umsetzen des Bus-Audiosignals in ein TK-Signal für ein übliches Telekommunikationsgerät, insbesondere ein in Fig. 1 dargestelltes schnurloses Telefon bzw. Mobiltelefon 84, aufweist. Analog zu der/jeder TV-Gateway-Station 34 bzw. analog zu den Wohnungsstationen 4 ist auch die/jede TK-Gateway-Station 82 in die Anlagen-Stationszuordnung programmierbar.

An dieser Stelle soll die Anlagen-Programmierung genauer erläutert werden.

Zur Inbetriebnahme der Hauskommunikationsanlage wird zunächst die Anlage in einen Programmiermodus geschaltet. Dies erfolgt vorzugsweise durch Betätigen eines Schaltelementes (Programmiertaste) des Bus-Steuergerätes 8, wobei diese Programmiertaste für eine bestimmte Mindestzeit von beispielsweise 3 Sekunden gedrückt zu halten ist. Der erfolgte Übergang in den Programmiermodus wird zweckmäßigerweise optisch und/oder akustisch signalisiert. Die Anlage befindet sich dann für eine bestimmte Zeit (sogenannte Timeoutzeit) von z. B. 10 Minuten im Programmiermodus und wird dann automatisch wieder aus dem Programmiermodus zurück in einen normalen Betriebsmodus geschaltet, sofern dies nicht schon früher manuell über die Programmiertaste durch eine kurze Betätigung (z. B. kürzer als 3 Sekunden) erfolgt. Die Timeoutzeit wird vorzugsweise selbsttätig durch jede Datenübertragung über den Bus 6 retriggert, d. h. neu gestartet.

Bevorzugt erfolgt die Programmierung dann analog zu dem Inbetriebnahmeverfahren, wie es in der eingangs schon erwähnten DE 102 53 308 B4 beschrieben ist. Auf diese Veröffentlichung wird deshalb in vollem Umfange Bezug genommen.

Demnach werden im Programmiermodus zunächst alle bezüglich ihrer Zuordnung zu den Wohnungsstationen 4 (z. B. WS1 bis WS3) und zu jeder vorhandenen TV-Gateway-Station 34 sowie eventuell der oder den TK-Gateway-Station(en) 82 zu programmierenden Ruftasten 18 der Türstation 2 in einer beliebig gewählten, dann aber für die weitere Programmierung festgelegten Reihenfolge nacheinander jeweils für eine bestimmte Mindestzeit von z. B. 3 Sekunden betätigt. Dadurch werden tastenspezifische Adressen (digitale Codes) entsprechend dieser Reihenfolge so in einem Speicher (sogenannter Programmierpuffer) abgelegt, dass sie nachfolgend separat nacheinander wieder entsprechend ihrer Reihenfolge abrufbar sind. Jede erfolgte Annahme einer Adresse wird vorzugsweise durch einen kurzen akustischen Quittungston von z. B. einer Sekunde Dauer als Hinweis an den Installateur bestätigt, dass die jeweilige Ruftaste 18 losgelassen und die nächste Ruftaste 18 betätigt werden kann. Eventuell kann die selbe Ruftaste 18 auch mehrmals hintereinander betätigt werden, wenn mehrere Stationen (4, 34, 82) dieser Ruftaste 18 zugeordnet werden sollen. Dies gilt insbesondere für den Fall, dass eine der Ruftasten 18 einer bestimmten Wohnungsstation 4 und auch einer zugehörigen TV-Gateway-Station 34 zugeordnet werden soll.

Nachdem alle Ruftasten 18 entsprechend der dadurch festgelegten Reihenfolge betätigt und dadurch die tastenspezifischen Adressen in dieser Reihenfolge abgelegt wurden, beginnt die Zuordnung der Wohnungsstationen 4 und der weiteren vorhandenen Stationen 34 und gegebenenfalls 82, indem nacheinander an jeder Station ein bestimmter Programmierbefehl eingegeben wird. So wird an jeder Wohnungsstation 4 ein zugehöriges Schaltelement für eine bestimmte Mindestzeit, d. h. für eine Programmier-Betätigungsdauer von z. B. 3 Sekunden, betätigt. Dadurch wird die entsprechend der zuvor abgelegten Reihenfolge jeweils nächste Adresse aus dem Programmierpuffer abgerufen und als Anrufadresse für die jeweilige Wohnungsstation 4 (WS1 bis WS3) gespeichert. Diese erfolgte Speicherung wird von der Anlage akustisch durch einen Quittungston und/oder optisch signalisiert. Der Installateur kann dann die entsprechende Programmierung der nächsten Wohnungsstation 4 fortsetzen. Hierbei kann als Schaltelement für diese Programmierung jeder Wohnungsstation 4 ein Taster verwendet werden, der im normalen Betriebsmodus der Anlage eine andere Funktion hat. Dieser Taster erhält somit eine Doppelfunktion. Vorzugsweise wird die Licht-Taste 15 der Wohnungsstation 4 verwendet. Alternativ oder zusätzlich kann für diese Funktion mit Vorteil auch die zugehörige Etagenruftaste 22 verwendet werden, was insbesondere dann vorteilhaft ist, wenn der Installateur gerade keinen Zugang zu der jeweiligen Wohnung und der darin befindlichen Wohnungsstation 4 haben sollte.

Gemäß Fig. 8 erfolgt bei der/jeder TV-Gateway-Station 34 die Ruftasten-Zuordnung über die Menüsteuerung, indem anhand des TV-Bildes mittels der Bedienelemente 76, 78 der Menüpunkt "RUFTASTE ZUORDNEN" ausgewählt und bestätigt wird. Die erfolgte Abspeicherung der jeweiligen Ruftasten-Adresse im Ruftastenspeicher 70 wird zum Beispiel durch das Symbol "+" angezeigt, ansonsten erscheint beispielsweise das Zeichen"-".

Vorzugsweise ist es möglich, die jeweilige TV-Gateway-Station 34 allen Ruftasten 18 der gleichen Türstation 2 zuzuordnen, wozu lediglich die Adresse der Türstation 2 in dem Stationspeicher 72 abgelegt werden muss. Dies erfolgt gemäß Fig. 8 über die Auswahl des Menüpunktes "STATION ZUORDNEN", wodurch ein gesonderter Programmiermodus der TV-Gateway-Station 34 aktiviert wird, in dem an der Türstation 2 durch Betätigen einer beliebigen Ruftaste 18 die Türstation-Adresse zur TV-Gateway-Station 34 gesendet wird.

Weiterhin kann bevorzugt der/jeder TV-Gateway-Station 34 mindestens eine Wohnungsstation 4 zugeordnet werden. Dies erfolgt ebenfalls durch Auswahl des Menüpunktes "STATION ZUORDNEN", und in diesem Zustand wird von der/jeder einzulernenden Station deren Adresse ausgesendet (z. B. durch Drücken der Lichttaste 15 an der jeweiligen Wohnungsstation 4), die dann im Stationsspeicher 72 abgelegt wird.

Nach Abschluss der Stations-Zuordnung ist dieser Modus wieder über das Menü zu verlassen.

In der bevorzugten Ausgestaltung mit dem zusätzlichen Kameraspeicher 74 wird automatisch bei der ersten im Programmiermodus erfolgenden Ruftasten-Betätigung an der Türstation 2 deren Adresse im Kameraspeicher 74 abgelegt, sofern diese Türstation 2 mit einer Kamera 28 ausgestattet ist.

Gemäß Fig. 9 können bei Bedarf in einem Menü "LÖSCHEN" bestimmte Speicherinhalte auch wieder gelöscht werden.

Nachdem auf die beschriebene Weise alle vorhandenen Stationen 4, 34 und gegebenenfalls 82 den Ruftasten 18 der Türstation 2 zugeordnet wurden, und nachdem gegebenenfalls die Stationszuordnung der TV-Gateway-Station 34 abgeschlossen wurde, ist der Programmiermodus am Steuergerät 8 wieder zu verlassen.

Anhand der Fig. 5 bis 7 sollen einige mögliche Anlagen-Konfigurationen beispielhaft erläutert werden.

In Fig. 5 ist ein Aufbau mit einer Türstation TS1, drei Wohnungsstationen WS1, WS2 und WS3 sowie mit (nur) einer TV-Gateway-Station 34 dargestellt. In diesem Beispiel ist das TV-Gerät im Scart-Direktanschluss mit der TV-Gateway-Station 34 verbunden. Die Türstation TS1 weist drei Ruftasten RT1 bis RT3 auf. Diese Konfiguration ist beispielhaft so programmiert, dass im Ruftastenspeicher 70 die Adressen der Ruftasten RT1 und RT2 der Türstation TS1 und im Stationsspeicher 72 die Adressen der Wohnungsstationen WS1 und WS2 abgelegt sind. Zusätzlich ist die Adresse der Türstation TS1 im Kameraspeicher 74 abgelegt, da TS1 mit einer Kamera ausgestattet ist, was durch den Zusatz (K) im Kameraspeicher 74 angedeutet ist. Durch diese beispielhafte Programmierung wird die TV-Gateway-Station 34 aktiviert, wenn die Ruftaste RT1 oder RT2 an der Türstation TS1 betätigt wird. Eine Betätigung der Ruftaste RT3 bewirkt jedoch keine Aktivierung der TV-Gateway-Station 34. Nach erfolgter Aktivierung wird das von der Kamera 28 der Türstation TS1 erzeugte Bild auf dem Bildschirm des TV-Gerätes dargestellt. Wenn nun an der gerufenen Wohnungsstation WS1 oder WS2 eine Taste "abheben" zum Aufbau einer Sprechverbindung betätigt wird, sendet diese Wohnungsstation unter anderem ihre Adresskennung auf den Bus 6. Dies bewirkt einerseits, dass die Türstation die Audioverbindung herstellt. Andererseits überprüft auch die TV-Gateway-Station 34 diese Adresskennung, und sie bleibt aktiv, weil diese Adresse (WS1 oder WS2) im Stationsspeicher 72 enthalten ist. Wenn aber in diesem Beispiel gemäß Fig. 5 die Wohnungsstation WS3 ebenfalls der Ruftaste RT1 (oder RT2) zugeordnet wäre und der Bewohner sich auf den Ruf gemeldet hätte, so würde die TV-Gateway-Station 34 inaktiv (abgeschaltet),weil die Adresse WS3 nicht im Stationsspeicher 72 enthalten ist. Somit kennt die TV-Gateway-Station 34 die ihr zugeordnete(n) Wohnungsstation(en). Bei Beendigung der Audioverbindung wird die TV-Gateway-Station 34 ebenfalls selbsttätig abgeschaltet. Außerdem kann vorzugsweise auch jederzeit bei bestehender Audioverbindung bei Bedarf die TV-Gateway-Station 34 über den Aktor 54 (vgl. Fig. 3) abgeschaltet werden.

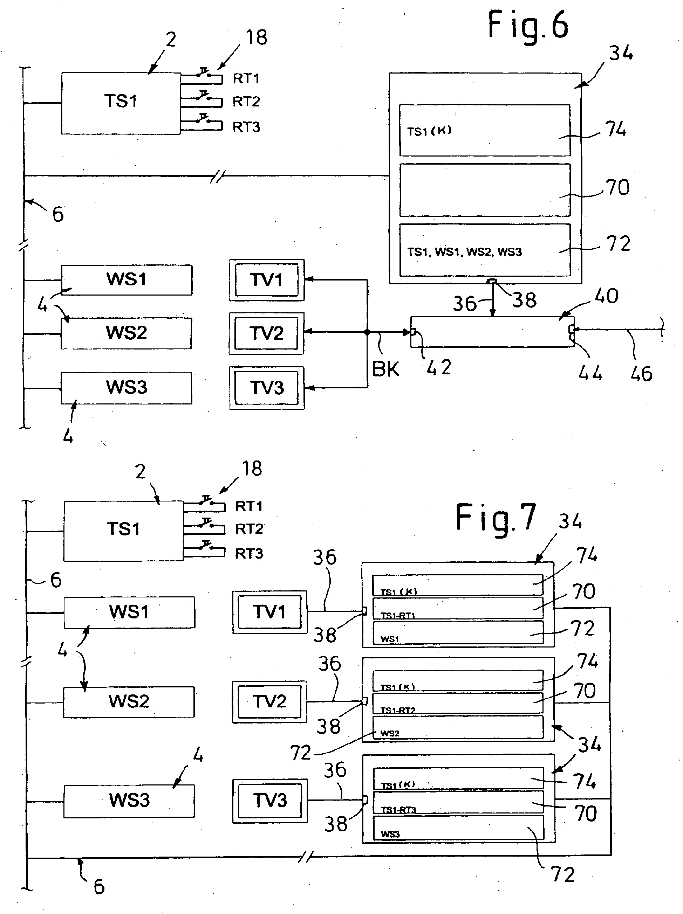

In Fig. 6 ist eine Konfiguration dargestellt, wobei drei Wohnungsstationen WS1 bis WS3 eine gemeinsame TV-Gateway-Station 34 zugeordnet ist. Trotzdem kann in der Nähe jeder Wohnungsstation ein TV-Gerät TV1 bis TV3 mit dem Bild von der Türstation TS1 versorgt werden, indem das Ausgangssignal der TV-Gateway-Station 34 über den Umsetzer 40 in eine BK-Anlage eingespeist wird, an der jedes TV-Gerät TV1 bis TV3 angeschlossen ist. In diesem Fall ist die Adresse der Türstation TS1 zusätzlich zu den Adressen der Wohnungsstationen im Stationsspeicher 72 abgelegt. Dadurch erübrigt es sich, die einzelnen Ruftastenadressen zusätzlich im Ruftastenspeicher 70 zu speichern. Somit wird durch Betätigen einer beliebigen Ruftaste der Türstation TS1 die TV-Gateway-Station 34 aktiviert, und sie bleibt auch aktiv, wenn von einer beliebigen Wohnungsstation aus die Audioverbindung hergestellt wird.

Als drittes Beispiel ist in Fig. 7 eine Konstellation mit drei Wohnungsstationen WS1 bis WS3 dargestellt, denen jeweils eine eigene TV-Gateway-Station 34 mit direkt- angeschlossenem TV-Gerät zugeordnet ist. Durch die eingetragene Programmierung wird durch die jeweilige Ruftaste (z. B. RT2) nur bei der zugehörige Wohnungsstation (z. B. WS2) die zugeordnete TV-Gateway-Station 34 mit dem angeschlossenem TV-Gerät (z. B. TV2) aktiviert.

Anhand dieser Beispiele dürfte nachvollziehbar sein, dass beliebige andere Konstellationen problemlos herstellbar sind.

Bei allen Beispielen ist es durch die im Kameraspeicher 74 abgelegte Adresse der Türstation TS1 (K) möglich, auch ohne Türruf und ohne Aufbau einer Audioverbindung eine Bildübertragung von der Wohnungsstation bzw. von der zugehörigen TV-Gateway-Station 34 aus zu initiieren. Dazu kann z. B. über den Aktor 54 ein entsprechender Schaltbefehl eingegeben werden, wodurch die TV-Gateway-Station 34 über den Bus 6 die Türstation TS1 durch gezielte Adressierung veranlasst, die Kamera 28 zu aktivieren und das Bus-Videosignal zu liefern.

Das Einlernen der Wohnungsstationen in den Stationsspeicher 72 hat zwei Hauptgründe. Einerseits wird dadurch erreicht, dass die TV-Gateway-Station 34 selbsttätig deaktiviert wird, wenn ein Türruf an einer auf die gleiche Ruftaste programmierten, aber nicht im Stationsspeicher 72 abgelegten Wohnungsstation 4 angenommen wird. Das TV-Gerät wird dadurch selbsttätig wieder in den normalen Fernsehbetrieb umgeschaltet, ohne dass dazu eine menschliche Aktion erforderlich wäre. Andererseits kann eine von der Türstation gerufene Wohnungsstation nach einer Beendigung einer Audioverbindung bei Bedarf durch erneutes Abheben des Hörers bzw. durch erneute Betätigung der Sprechtaste eine Audioverbindung zur Türstation wieder aufbauen. Dabei sendet diese Wohnungsstation ein Telegramm mit ihrer Absenderkennung an die Türstation, damit diese wieder den Sprechschaltkreis und auch die Kamera 28 aktiviert. Dabei wird auch die TV-Gateway-Station 34 aktiviert, indem diese ebenfalls die Absenderkennung der Wohnungsstation empfängt, mit ihren Speicherinhalten vergleicht und bei Übereinstimmung einschaltet.

Abschließend sei bemerkt, dass sich die Erfindung nicht nur auf die gesamte Anlage, sondern auch auf eine einzelne TV-Gateway-Station in der erfindungsgemäßen Ausgestaltung bezieht.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Hauskommunikationsanlage mit mindestens einer Türstation (2) und einer beliebigen Anzahl von Wohnungsstationen (4), wobei alle Stationen (2, 4) über einen gemeinsamen Zweidraht-Bus (6) verbunden oder verbindbar sind, der zur Übertragung von Steuer-, Audio- und Videosignalen ausgelegt ist, wobei die Türstation (2) eine Video-Kamera (28) mit Mitteln zum Erzeugen eines über den Bus (6) zu übertragenden, außerhalb einer hörbaren Audio-Frequenz liegenden Bus-Videosignals aufweist,
**gekennzeichnet durch** mindestens eine an den Bus (6) angeschlossene oder anschließbare TV-Gateway-Station (34) mit Mitteln zum Umsetzen des Bus-Videosignals in ein für ein übliches Fernsehgerät (TV) geeignetes TV-Eingangssignal, und zwar in ein HF-moduliertes Signal zur Einspeisung in ein Breitband - oder Antennenkabel oder ein analoges FBAS-Signal oder ein analoges RGB-Signal oder ein analoges S-Video-Signal oder ein analoges YUV-Signal oder ein digitales HDMI-Signal, sowie **durch** Speichermittel zum Speichern von elektronischen Adressen zum Festlegen von Zuordnungen zwischen Türstations-Ruftasten (18), Wohnungsstation(en) (4) und TV-Gateway-Station(en) (34).

2. Hauskommunikationsanlage nach Anspruch 1,
**dadurch gekennzeichnet, dass** dasTV-Eingangssignalein HF-moduliertes Signal (VHF/UHF) ist, wobei die TV-Gateway-Station (34) einen Ausgang (38) zum Anschluss eines Breitband-Kabels (BK) aufweist.

3. Hauskommunikationsanlage nach Anspruch 1,
**dadurch gekennzeichnet, dass** dasTV-Eingangssignalein Basisband-Signal, insbesondere ein Farb-Bild-Austast-Synchron-Signal (FBAS) ist, wobei die N-Gateway-Station (34) einen bevorzugt als Scart-Anschluss ausgebildeten Ausgang (38) aufweist.

4. Hauskommunikationsanlage nach Anspruch 3,
**gekennzeichnet durch** einen zusätzlichen, mit der TV-Gateway-Station (34) verbindbaren Umsetzer (40) zum Umsetzen des Basisband-Signals in ein HF- moduliertes Signal (VHF/UHF), wobei der Umsetzer (40) mindestens einen Anschluss (42) für ein Breitband-Kabel (BK) aufweist.

5. Hauskommunikationsanlage nach einen der Ansprüche 1 bis 4,
**gekennzeichnet durch** einen zusätzlichen, mit der TV-Gateway-station (34) verbindbaren Umsetzer (50) zum Umsetzen des TV-Eingangssignals in ein Computer-Netzwerk-Signal zur Video-Bilddarstellung auf einem üblichen Computer-Bildschirm.

6. Hauskommunikationsanlage nach einem der Ansprüche 1 bis 5,
**dadurch gekennzeichnet, dass** die TV-Gateway-Station (34) einen Steuereingang (52) zum Anschluss einer Steuereinheit, insbesondere in Form eines direkt manuell betätigbaren oder indirekt drahtlos mittels eines Handsenders (56) steuerbaren Aktors (54) aufweist.

7. Hauskommunikationsanlage nach einem der Ansprüche 1 bis 6,
**dadurch gekennzeichnet, dass** die TV-Gateway-Station (34) einen Busankoppler (62) zum Anschluss an den Bus (6) sowie einen mit dem Busankoppler (62) zusammenwirkenden Videoumsetzer (64) aufweist.

8. Hauskommunikationsanlage nach einem der Ansprüche 1 bis 7,
**dadurch gekennzeichnet, dass** die TV-Gateway-Station (34) modular aus einem Busankopplermodul, einem Video-Umsetzermodul und einem TV-Anschlussmodul ausgebildet ist, wobei vorzugsweise das Busankopplermodul und das Video-Umsetzermodul jeweils als Einsatzgerät nach Art eines üblichen Gebäude-Elektroinstallationsgerätes ausgebildet und in eine übliche Elektro-Installationsdose einsetzbar ist, und wobei vorzugsweise das Anschlussmodul als ein unmittelbar insbesondere auf das Umsetzermodul aufsetzbares und dadurch elektrisch und mechanisch verbindbares Aufsatzgerät ausgebildet ist.

9. Hauskommunikationsanlage nach einem der Ansprüche 1 bis 8,
**dadurch gekennzeichnet, dass** dieTV-Gateway-Station (34) einen Ruftastenspeicher (70) zum Ablegen mindestens einer Ruftastenadresse aufweist.

10. Hauskommunikationsanlage nach einem der Ansprüche 1 bis 9,
**dadurch gekennzeichnet, dass** dieTV-Gateway-Station (34) einen Stationsspeicher (72) zum Ablegen mindestens einer Stationsadresse mindestens einer Türstation (2) und/oder mindestens einer Wohnungsstation (4) aufweist.

11. Hauskommunikationsanlage nach einem der Ansprüche 1 bis 10.
**dadurch gekennzeichnet, dass** dieTV-Gateway-Station (34) einen Kameraspeicher (74) zum Ablegen mindestens einer Adresse einer mit einer Kamera (28) ausgestatteten Türstation (2) aufweist.

12. Hauskommunikationsanlage nach einem der Ansprüche 1 bis 11,
**gekennzeichnet durch** Steuermittel derart, dass bei Auftreten eines Rufsignals einer Ruftaste (18) die TV-Gateway-Station (34) aktiviert wird, wenn die entsprechende Adresse der Rufsignal-Ruftaste (18) und/oder die zugehörige Stationsadresse der Türstation (2) in der TV-Gateway-Station (34) abgelegt sind/ist.

13. Hauskommunikationsanlage nach einem der Ansprüche 1 bis 12.
**gekennzeichnet durch** Steuermittel derart, dass bei Aktivieren einer Sprechverbindung zwischen der Türstation (2) und der jeweils gerufenen Wohnungsstation (4) entweder die TV-Gateway-Station (34) aktiviert bleibt, wenn die Adresse dieser Wohnungsstation (4) in der TV-Gateway-Station (34) abgelegt ist, oder die TV-Gateway-Station (34) deaktiviert wird, wenn die Adresse dieser Wohnungsstation (4) nicht in der TV-Gateway-Station (34) abgelegt ist.

14. Hauskommunikationsanlage nach einem der Ansprüche 1 bis 13,
**dadurch gekennzeichnet, dass** die TV-Gateway-Station (34) einen Schaltausgang (58) für von ihrem jeweiligen Funktionszustand abhängige Schaltsignale (60) aufweist.

15. Hauskommunikationsanlage nach einem der Ansprüche 1 bis 14,
**dadurch gekennzeichnet, dass** dieTV-Gateway-Station (34) Mittel für eine Menü-Steuerung über eine zur Darstellung auf dem angeschlossenen Fernsehgerät (TV) generierte und über Bedienelemente (76, 78) steuerbare Menü-Struktur aufweist.

16. Hauskommunikationsanlage nach einem der Ansprüche 1 bis 15,
**gekennzeichnet durch** mindestens eine TK-Gateway-Station (82) mit Mitteln zum Umsetzen des Bus-Audiosignals in ein TK-Signal für ein übliches Telekommunikationsgerät, insbesondere ein Mobiltelefon (84).

17. TV-Gateway-Station (34) für eine Hauskommunikationsanlage nach einem der Ansprüche 1 bis 16, mit Mitteln zum Umsetzen eines über einen Zweidraht-Bus (6) zu übertragenden, außerhalb einer hörbaren Audio-Frequenz modulierten Bus-Videosignals in ein TV-Eingangssignal eines üblichen Fernsehgerätes (TV), und zwar in ein HF-moduliertes Signal zur Einspeisung in ein Breitband - oder Antennenkabel oder ein analoges FBAS-Signal oder ein analoges RGB-Signal oder ein analoges S-Video-Signal oder ein analoges YUV-Signal oder ein digitales HDMI-Signal.

18. TV-Gateway-Station nach Anspruch 17,
**gekennzeichnet durch** mindestens eines der kennzeichnenden Merkmale der Ansprüche 2, 3, 6 bis 15.

## Claims

1. A domestic communications system with at least one door station (2) and any number whatsoever of apartment stations (4), wherein all the stations (2, 4) are connected or able to be connected via a common two-wire bus (6) which is designed to transmit control, audio and video signals, wherein the door station (2) has a video camera (28) with means for generating a bus video signal which is to be transmitted via the bus (6) and which lies outside an audible audio frequency,
**characterised by** at least one TV gateway station (34), which is connected or able to be connected to the bus (6), with means for converting the bus video signal into a TV input signal suitable for a conventional television set (TV), and namely into an HF-modulated signal for feeding into a broadband or antenna cable or an analog CVBS signal or an analog RGB signal or an analog S-Video signal or an analog YUV signal or a digital HDMI signal, and by storage means for storing electronic addresses for defining assignments between door-station call buttons (18), apartment station(s) (4) and TV gateway station(s) (34).

2. A domestic communications system according to Claim 1, **characterised in that** the TV input signal is an HF-modulated signal (VHF/UHF), the TV gateway station (34) having an output (38) for connecting a broadband cable (BK).

3. A domestic communications system according to Claim 1, **characterised in that** the TV input signal is a baseband signal, in particular a colour-video-blanking synchronisation signal (CVBS), the TV gateway station (34) having an output (38) which is preferably designed as a SCART connection.

4. A domestic communications system according to Claim 3, **characterised by** an additional converter (40) which can be connected to the TV gateway station (34) for converting the baseband signal into an HF-modulated signal (VHF/UHF), the converter (40) having at least one connection (42) for a broadband cable (BK).

5. A domestic communications system according to one of Claims 1 to 4, **characterised by** an additional converter (50) which can be connected to the TV gateway station (34) for converting the TV input signal into a computer network signal for video image display on a conventional computer screen.

6. A domestic communications system according to one of Claims 1 to 5, **characterised in that** the TV gateway station (34) has a control input (52) for connecting a control unit, in particular in the form of an actuator (54) which can be actuated directly manually or can be controlled indirectly wirelessly by means of a handheld transmitter (56).

7. A domestic communications system according to one of Claims 1 to 6, **characterised in that** the TV gateway station (34) has a bus coupling unit (62) for connection to the bus (6), and a video converter (64) which cooperates with the bus coupling unit (62).

8. A domestic communications system according to one of Claims 1 to 7, **characterised in that** the TV gateway station (34) is formed in modular manner from a bus coupling unit module, a video converter module and a TV connection module, with preferably the bus coupling unit module and the video converter module in each case being designed as an insertion device in the manner of conventional building electrical installation equipment and being able to be inserted into a conventional electrical installation socket, and with preferably the connection module being designed as a top attachment device which can be placed directly in particular on top of the converter module and can thereby be connected electrically and mechanically.

9. A domestic communications system according to one of Claims 1 to 8, **characterised in that** the TV gateway station (34) has a call-button memory (70) for filing at least one call-button address.

10. A domestic communications system according to one of Claims 1 to 9, **characterised in that** the TV gateway station (34) has a station memory (72) for filing at least one station address of at least one door station (2) and/or at least one apartment station (4).

11. A domestic communications system according to one of Claims 1 to 10, **characterised in that** the TV gateway station (34) has a camera memory (74) for filing at least one address of a door station (2) which is equipped with a camera (28).

12. A domestic communications system according to one of Claims 1 to 11, **characterised by** control means such that upon the occurrence of a call signal of a call button (18) the TV gateway station (34) is activated if the corresponding address of the call-signal call button (18) and/or the associated station address of the door station (2) are/is filed in the TV gateway station (34).

13. A domestic communications system according to one of Claims 1 to 12, **characterised by** control means such that, upon activation of a speech connection between the door station (2) and the apartment station (4) called in each case, either the TV gateway station (34) remains activated if the address of this apartment station (4) is filed in the TV gateway station (34), or the TV gateway station (34) is deactivated if the address of this apartment station (4) is not filed in the TV gateway station (34).

14. A domestic communications system according to one of Claims 1 to 13, **characterised in that** the TV gateway station (34) has a switching output (58) for switching signals (60) which depend on its respective function state.

15. A domestic communications system according to one of Claims 1 to 14, **characterised in that** the TV gateway station (34) has means for a menu control via a menu structure which is generated for display on the connected television set (TV) and can be controlled via operating elements (76, 78).

16. A domestic communications system according to one of Claims 1 to 15, **characterised by** at least one TC gateway station (82) with means for converting the bus audio signal into a TC signal for a conventional telecommunications device, in particular a mobile telephone (84).

17. A TV gateway station (34) for a domestic communications system according to one of Claims 1 to 16, with means for converting a bus video signal which is to be transmitted via a two-wire bus (6) and which is modulated outside an audible audio frequency into a TV input signal of a conventional television set (TV), and namely into an HF-modulated signal for feeding into a broadband or antenna cable or an analog CVBS signal or an analog RGB signal or an analog S-Video signal or an analog YUV signal or a digital HDMI signal.

18. A TV gateway station according to Claim 17, **characterised by** at least one of the characterising features of Claims 2, 3, 6 to 15.

## Revendications

1. Installation de communication domestique ayant au moins une station de porte (2) et un nombre quelconque de stations d'appartement (4), dans laquelle toutes les stations (2, 4) sont reliées ou peuvent être reliées par un bus (6) bifilaire commun, qui est conçu pour la transmission de signaux de commande, de signaux audio et de signaux vidéo, dans laquelle la station de porte (2) comprend une caméra vidéo (28) ayant des moyens pour générer un signal de bus vidéo, situé en dehors d'une fréquence audio audible, à transmettre par le bus (6),
**caractérisée par** au moins une station passerelle TV (34), branchée ou pouvant être branchée sur le bus (6), ayant des moyens pour la conversion du signal de bus vidéo en un signal d'entrée TV approprié pour un téléviseur (TV) usuel, à savoir en un signal modulé HF en vue de son introduction dans un câble large bande ou dans un câble d'antenne, ou en un signal FBAS analogique, ou en un signal RVB analogique, ou en un signal S-Vidéo analogique, ou en un signal YUV analogique, ou en un signal HDMI numérique, ainsi que par des moyens de stockage en vue du stockage d'adresses électroniques servant à la détermination d'associations entre des touches d'appel de station de porte (18), une ou des stations d'appartement (4) et une ou des stations passerelle TV (34).

2. Installation de communication domestique selon la revendication 1,
**caractérisée en ce que** le signal d'entrée TV est un signal modulé HF (VHF/UHF), dans laquelle la station passerelle TV (34) comporte une sortie (38) pour le branchement d'un câble large bande (BK).

3. Installation de communication domestique selon la revendication 1,
**caractérisée en ce que** le signal d'entrée TV est un signal de bande de base, en particulier un signal FBAS (signal de synchronisation de chrominance), dans laquelle la station passerelle TV (34) comporte une sortie (38) conçue de préférence sous la forme d'un branchement SCART.

4. Installation de communication domestique selon la revendication 3,
**caractérisée par** un convertisseur (40) supplémentaire, pouvant être relié à la station passerelle TV (34), servant à la conversion du signal de bande de base en un signal modulé HF (VHF/UHF), dans laquelle le convertisseur (40) comporte au moins un branchement (42) pour un câble large bande (BK).

5. Installation de communication domestique selon l'une quelconque des revendications 1 à 4,
**caractérisée par** un convertisseur (50) supplémentaire pouvant être relié à la station passerelle TV (34), servant à la conversion du signal d'entrée TV en un signal de réseau d'ordinateurs pour la représentation d'image vidéo sur un écran usuel d'ordinateur.

6. Installation de communication domestique selon l'une quelconque des revendications 1 à 5,
**caractérisée en ce que** la station passerelle TV (34) comprend une entrée de commande (52) pour le branchement d'une unité de commande, en particulier sous la forme d'un actionneur (54) pouvant être actionné directement à la main ou être commandé indirectement sans fil au moyen d'un émetteur portatif (56).

7. Installation de communication domestique selon l'une quelconque des revendications 1 à 6,
**caractérisée en ce que** la station passerelle TV (34) comprend un dispositif de couplage de bus (62) pour le branchement au bus (6) ainsi qu'un convertisseur vidéo (64) coopérant avec le dispositif de couplage de bus (62).

8. Installation de communication domestique selon l'une quelconque des revendications 1 à 7,
**caractérisée en ce que** la station passerelle TV (34) est conçue sous une forme modulaire à partir d'un module de couplage de bus, d'un module de conversion vidéo et d'un module de branchement TV, dans laquelle le module de couplage de bus et le module de conversion vidéo sont conçus de préférence chacun sous la forme d'un appareil inséré à la manière d'un appareil usuel d'installation électrique domestique et pouvant être inséré dans boîtier standard usuel d'installation électrique, et dans laquelle le module de branchement est conçu de préférence sous la forme d'un appareil rapporté pouvant être monté directement, en particulier sur le module de conversion, et pouvant de ce fait être relié de manière électrique et mécanique.

9. Installation de communication domestique selon l'une quelconque des revendications 1 à 8,
**caractérisée en ce que** la station passerelle TV (34) comprend une mémoire de touches d'appel (70) pour le stockage en mémoire d'au moins une adresse de touche d'appel.

10. Installation de communication domestique selon l'une quelconque des revendications 1 à 9,
**caractérisée en ce que** la station passerelle TV (34) comprend une mémoire de station (72) pour le stockage en mémoire d'au moins une adresse de station d'au moins une station de porte (2) et/ou d'au moins une station d'appartement (4).

11. Installation de communication domestique selon l'une quelconque des revendications 1 à 10,
**caractérisée en ce que** la station passerelle TV (34) comporte une mémoire de caméra (74) pour le stockage en mémoire d'au moins une adresse d'une station de porte (2) équipée d'une caméra (28).

12. Installation de communication domestique selon l'une quelconque des revendications 1 à 11,
**caractérisée par** des moyens de commande de telle sorte que, lorsqu'un signal d'appel depuis une touche d'appel (18) se produit, la station passerelle TV (34) est activée lorsque l'adresse correspondante de la touche d'appel (18) du signal d'appel ou/et l'adresse de la station de porte (2) associée est/sont stockée(s) en mémoire dans la station passerelle TV (34).

13. Installation de communication domestique selon l'une quelconque des revendications 1 à 12,
**caractérisée par** des moyens de commande, de telle sorte que, lors de l'activation d'une liaison vocale entre la station de porte (2) et chacune des stations d'appartement (4) appelées, soit la station passerelle TV (34) reste activée lorsque l'adresse de cette station d'appartement (4) est stockée dans la mémoire de la station passerelle TV (34), soit la station passerelle TV (34) est désactivée lorsque l'adresse de cette station d'appartement (4) n'est pas stockée dans la mémoire de la station passerelle TV (34).

14. Installation de communication domestique selon l'une quelconque des revendications 1 à 13,
**caractérisée en ce que** la station passerelle TV (34) comprend une sortie de connexion (58) pour des signaux de connexion (60) dépendant de son état fonctionnel courant.

15. Installation de communication domestique selon l'une quelconque des revendications 1 à 14,
**caractérisée en ce que** la station passerelle TV (34) comprend des moyens pour une commande de menus par le biais d'une structure de menus générée pour la représentation sur le téléviseur (TV) branché et pouvant être commandée par des éléments de commande (76, 78).

16. Installation de communication domestique selon l'une quelconque des revendications 1 à 15,
**caractérisée par** au moins une station passerelle de télécommunication (82) ayant des moyens pour la conversion du signal de bus audio en un signal de télécommunication pour un appareil de télécommunication usuel, en particulier un téléphone mobile (84).

17. Station passerelle TV (34) pour une installation de communication domestique selon l'une quelconque des revendications 1 à 16, ayant des moyens pour la conversion d'un signal de bus vidéo, modulé en dehors d'une fréquence audio audible, à transmettre par le biais d'un bus (6) bifilaire, en un signal d'entrée TV approprié pour un téléviseur (TV) usuel, à savoir en un signal modulé HF pour son introduction dans un câble large bande ou un câble d'antenne, ou en un signal FBAS analogique, ou en un signal RVB analogique, ou en un signal S-Vidéo analogique, ou en un signal YUV analogique, ou en un signal HDMI numérique.

18. Station passerelle TV selon la revendication 17,
**caractérisée par** au moins une des fonctions caractéristiques des revendications 2, 3 et 6 à 15.
